# EUROPEAN PATENT APPLICATION

(11) **EP 3 690 653 A1**
(43) Date of publication of application: **05.08.2020**
(21) Application number: 19185480.1
(22) Date of filing: 10.07.2019
(51) Int. Cl.: G06F 11/07, G06F 11/08, G06F 11/14, G06F 21/00

(54) **BIOS RECOVERY AND UPDATE**

(30) Priority: 31.01.2019 US 201916263681
(71) Applicant: Quanta Computer Inc., Taoyuan City 33377 (TW)
(72) Inventor: LI, Yung-Fu, 33377 Taoyuan City (TW)
(74) Representative: Krauns, Christian

(57) **Abstract**

A method and system writing a server BIOS image to a BIOS flash by a BMC is provided. The method includes receiving a Golden BIOS image within a BMC flash. The BMC flash is associated with the BMC. The method also includes determining that an active BIOS image within a BIOS flash is either a damaged BIOS image or a maliciously altered BIOS image. In response to a damaged or a maliciously altered BIOS image, the method includes overwriting the active BIOS image in the BIOS flash with the Golden BIOS.

## Description

### FIELD OF THE INVENTION

The present disclosure relates to network computing and more specifically, to a firmware update for a server BIOS image by an independently operating baseboard management controller.

### BACKGROUND

When a server is power cycled, the first action a central processing unit (CPU) takes is to send a message to activate the Basic Input and Output System (BIOS). The BIOS then runs a series of tests, called the POST (Power On Self-Test), to verify if the system devices are working correctly. The BIOS enables the essential functions for the server to operate. If the BIOS is corrupted, the CPU cannot function. However, a typical BIOS can restore a valid BIOS image in the event that it becomes corrupt. This is accomplished by storing a recovery program in a flash memory that is not in-system writable. This ensures the recovery program cannot be corrupted. The recovery program is usually a simple code that has the ability of initializing minimal system hardware to retrieve a new code image from a flash drive or other removable media.

### SUMMARY

The various examples of the present disclosure are directed towards a method and system for writing a server BIOS image to a BIOS flash by a BMC. The method includes receiving a Golden BIOS image within a BMC flash. The BMC flash is associated with the BMC. The method also includes determining that an active BIOS image within a BIOS flash is either a damaged BIOS image or a maliciously altered BIOS image. In response to the damage or alteration, the method includes overwriting the active BIOS image in the BIOS flash with the Golden BIOS.

In some embodiments of the disclosure, the method also includes decompressing the BIOS image within the BMC flash. The method can also include determining that a hash or checksum value stored within the active BIOS image fails to match a calculated hash or checksum value. The calculated hash or checksum value can be determined by the BMC. Furthermore, the method can also include determining that the BMC is unable to decrypt a BIOS hash or checksum value of the active BIOS image using a paired public key.

The present disclosure also teaches additional methods and systems for writing a server BIOS Image to a BIOS flash by a BMC. In some embodiments, a method includes receiving a BIOS image, storing the BIOS image to a BMC flash, and writing the BIOS image within the BMC flash to the BIOS flash. In some embodiments, the BIOS image within the BMC flash can be decompressed. Furthermore, a command to write the BIOS image within the BMC flash to the BIOS flash can be received from an administrator at a web interface.

Additional features and advantages of the disclosure will be set forth in the description that follows, and in part, will be obvious from the description, or can be learned by practice of the principles disclosed herein. The features and advantages of the disclosure can be realized and obtained by means of the instruments and combinations particularly pointed out in the appended claims. These and other features of the disclosure will become fully apparent from the following description and appended claims, or can be learned by the practice of the principles set forth herein.

### BRIEF DESCRIPTION OF THE DRAWINGS

In order to describe the manner in which the above-recited disclosure and its advantages and features can be obtained, a more particular description of the principles described above will be rendered by reference to specific examples illustrated in the appended drawings. These drawings depict only example aspects of the disclosure, and are therefore not to be considered as limiting of its scope. These principles are described and explained with additional specificity and detail through the use of the following drawings.
FIG. 1 illustrates a system, in accordance with an exemplary embodiment.
FIG. 2 depicts a flow chart describing a process for updating and writing a server BIOS image by an independently operating BMC.
FIG. 3 depicts a flow chart describing a process for a user-initiated BIOS image update, in accordance with an implementation of the present disclosure.

### DETAILED DESCRIPTION

The present invention is described with reference to the attached figures, where like reference numerals are used throughout the figures to designate similar or equivalent elements. The figures are not drawn to scale, and they are provided merely to illustrate the instant invention. Several aspects of the invention are described below with reference to example applications for illustration. It should be understood that numerous specific details, relationships, and methods are set forth to provide a full understanding of the invention. One having ordinary skill in the relevant art, however, will readily recognize that the invention can be practiced without one or more of the specific details, or with other methods. In other instances, well-known structures or operations are not shown in detail to avoid obscuring the invention. The present invention is not limited by the illustrated ordering of acts or events, as some acts may occur in different orders and/or concurrently with other acts or events. Furthermore, not all illustrated acts or events are required to implement a methodology in accordance with the present invention.

A typical server today contains both a Baseboard Management Controller (BMC) and a system Basic Input Output System (BIOS). Typically, these components execute code from flash memory devices. The BMC and BIOS have separate code images that are typically located in separate flash devices. The images contained in flash have a minimum of two sections of code: a boot block section and an operational code section. The boot block is typically write-protected and is not updated in the field. Conversely, the operational image can be updated in the field. In existing systems, the BIOS image can only be updated if the system has booted to an operating system. If a BIOS image upgrade is corrupted or faulty, the system is unable to boot to the operating system and is rendered inoperable. The present application teaches a method and system for writing a server BIOS image to a BIOS flash by a BMC. The disclosed method includes managing an authenticated and uncorrupted BIOS image within a BMC flash associated with the BMC; determining if a BIOS image within a BIOS flash is damaged or altered maliciously; and writing the authenticated and uncorrupted BIOS image within the BMC flash to the BIOS flash.

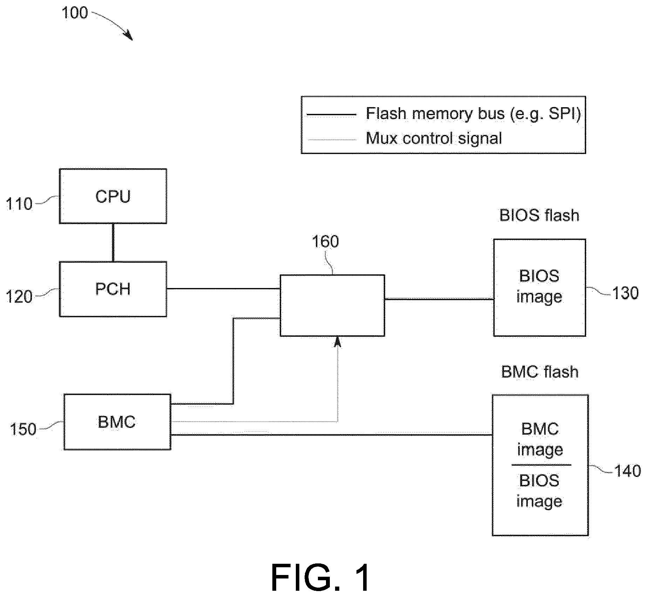

FIG. 1 illustrates an exemplary system 100. The system 100 can include a central processing unit (CPU) 110. The CPU 110 can include electronic circuitry that carries out the instructions of a computer program by performing the basic arithmetic, logical, control, and input/output (I/O) operations specified by the instructions. It should be understood that the CPU 110 can be a microprocessor, meaning it is housed on a single integrated circuit (IC) chip. An IC that contains a CPU may also contain memory, peripheral interfaces, and other components of a computer; such integrated devices are variously called microcontrollers or systems on a chip (SoC). The system 100 can also employ a multi-core processor, which is a single chip containing two or more CPUs called "cores."

The system 100 can also include a platform controller hub (PCH) 120 that is connected to the CPU 110. The PCH 120 can be configured to control certain data paths and support functions used in conjunction with the CPU 110. The system 100 can also include a BMC 150 that is connected to a BMC flash 140. The BMC 150 can directly correspond with the BMC flash 140. The BMC flash 140 can include a BMC image and a BIOS image which is known to work with the system 100 ("Golden BIOS"). The system 100 can also include a BIOS flash 130, which includes the BIOS image currently in use by the system 100. The system 100 can include a switch device 160. The switch device 160 can be configured as a SPI Mux device. In some exemplary embodiments, the switch device 160 can multiplex two SPI (Serial Peripheral Interface) master devices PCH 120 or BMC 150 to a single slave device located in the BIOS flash 130. The BMC 150 can control the master devices selection by an output pin extending from the BMC 150 to the switch device 160.

The Golden BIOS image can be stored and programmed into the BMC flash 140 during manufacture of the BMC flash 140. In an alternative embodiment, the BIOS image can be updated by local or remote software program (tool). This tool can be configured to send a command and a new Golden BIOS image to the BMC 150. The BMC 150 can then write the golden BIOS image to the BMC flash 140 memory. In some embodiments, the Golden BIOS image can be a complete file or a compressed file.

In the event the BIOS flash 130 contains a faulty or corrupt BIOS image, the BMC 150 can recover the damaged image in the BIOS flash 130 using the Golden BIOS image in the BMC flash 140. This process is detailed below.

The BMC 150 can detect whether the BIOS image stored in the BIOS flash 130 is damaged or corrupted in several ways. For example, the BMC 150 can detect a damaged or corrupted BIOS by verifying whether the BIOS POST or boot-up of the system 100 failed due to BIOS damage. The BIOS POST can include a series of tests including initializing system hardware and chipset registers; initializing power management; testing RAM; enabling the keyboard; testing serial and parallel ports; initializing floppy disk drives and hard disk controllers; and displaying system summary information. If the BIOS POST is successful, the BMC 150 will receive a POST end completed signal from the BIOS. In contrast, if the BIOS POST is unsuccessful, the BMC 150 will not receive a POST end completed signal from the BIOS. When the latter occurs, it signals to the BMC 150 that the BIOS image in the BIOS flash 130 may be damaged or corrupted. At this point, the BMC 150 can compare the Golden BIOS to the current BIOS in the BIOS flash 130 to determine if it is damaged or corrupted.

Another process for checking for a damaged or corrupted BIOS is for the BMC 150 to check the integrity and security of the BIOS image in the BIOS flash 130. The integrity of the BIOS image can be checked by the BMC 150 by first verifying whether the BIOS image contains a hash or checksum value or major BIOS code. The BMC 150 can then read the major code of the BIOS image in the BIOS flash 130 and calculate a hash or checksum value. Afterwards, the BMC 150 can compare the calculated hash or checksum value with the hash or checksum value in the BIOS flash 130. If the calculated hash or checksum value and the stored hash or checksum value are not the same, then the BMC 150 can determine that the BIOS image in the BIOS flash 130 is damaged or corrupted.

The security of the BIOS image can also be checked by the BMC 150. The BIOS hash or checksum value within the BIOS image is typically encrypted by a private key that is stored in its flash memory. The BMC 150 can attempt to decrypt the BIOS hash or checksum value using a paired public key. If the BMC 150 is unable to decrypt the BIOS hash or checksum value using the paired public key, the BMC 150 will determine that the BIOS image in the BIOS flash 130 was built and written by a non-authorized user.

Upon determining the BIOS image in the BIOS flash 130 has been damaged, corrupted, or subject to some breach of integrity or security, the BMC 150 is configured to read the BIOS image from the BMC flash 140. The BMC 150 can then decompress the Golden BIOS image from the BMC flash 140 and write it to the BIOS flash 130. In this way, the BMC 150 can replace the BIOS image in the BIOS flash 130 with the image in the BMC flash 140.

The BMC 150 can perform this process not only for an automatic BIOS recovery as described herein, but this process can also be used to facilitate updates to the BIOS image for the system 100. For example, a user can upload and write a BIOS image to the BMC flash 140 by way of BMC tools, commands, or other interfaces (e.g., web user interface). Furthermore, a user can update the BIOS image in the BIOS flash 130 via the BMC tools, commands, or other interfaces (e.g., web user interface).

In one embodiment, the BMC 150 is operatively coupled to the BIOS flash 130 via the switch device 160. Interfaces other than an SPI can be used to update the BIOS flash 130 by the BMC 150, including existing standard or proprietary connections. A connection can be implemented that uses standby power, as does the BMC 150. In this embodiment, the system 100 does not need to be fully powered, and the CPU 110 need not be running for the BMC 150 to update the BIOS image in the BIOS flash 130. In another embodiment, the BIOS flash 130 can be located on the same component (or flash card) as the BMC flash 140. This embodiment does not require the system 100 to be fully powered to complete an update. If the BIOS image has been updated correctly, the system 100 can be started. If the BIOS has not been updated correctly, an error can be logged and a notification can be sent to an administrator or operator.

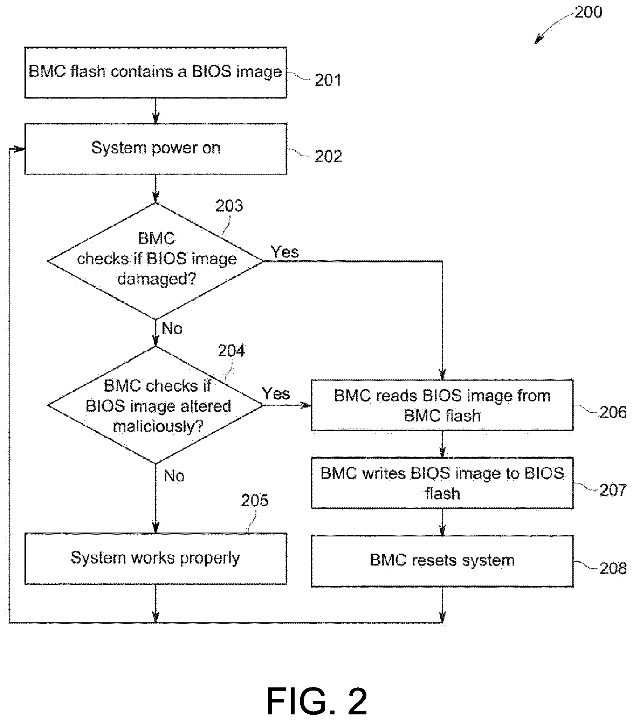

FIG. 2 depicts a flow chart describing a process 200 for updating and writing a server BIOS image by an independently operating BMC, in accordance with an implementation of the present disclosure. The process 200 indicated herein is described in detail with reference to the components of the system 100 of FIG. 1. As an initial matter, the BMC flash 140 can contain an authenticated and an uncorrupted BIOS image, at step 201. The BMC 150 can be configured to verify the integrity of the Golden BIOS image in the BMC flash 140 by hash or checksum before writing it to BIOS flash 130. At step 202, the system 100 can be powered on. At step 203, a determination can be made as to whether the BIOS image stored in the BIOS flash 130 has been corrupted or damaged, as discussed above. If it is determined that the BIOS image is not corrupted or damaged, the process 200 advances to step 204, where the BMC 150 determines if the BIOS image stored in the BIOS flash 130 has been altered maliciously. This can be accomplished as discussed above, using hash, checksum, or key checking. If it is determined that the BIOS image has not been altered maliciously at step 204, then the process 200 advances to step 205, where the system 100 is determined to be functioning properly.

Alternatively, if at step 203, it is determined that the BIOS image is corrupted or damaged, the process 200 advances to step 206, where the BMC 150 reads the Golden BIOS image stored in the BMC flash 140. Similarly, if at step 204, it is determined that the BIOS image has been altered maliciously, the process 200 also advances to step 206. Thereafter, at step 207, the BMC 150 writes the Golden BIOS image to the BIOS flash 130. The system 100 is then reset at step 208 to allow the system to restart using the Golden BIOS, now stored in the BIOS flash 130. The process 200 cycles back to step 202 at either steps 205 or 208.

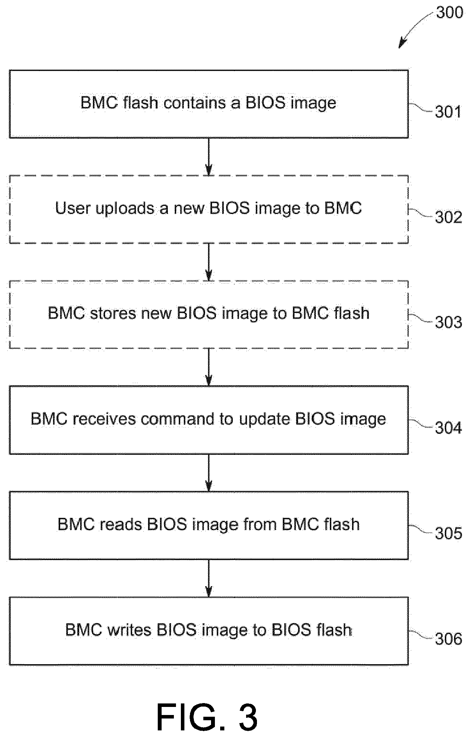

As described above, the methodologies described herein can also be used to provide a BMC-mediated BIOS updating method. FIG. 3 depicts a flow chart describing a process 300 for a user-initiated BIOS Image update, in accordance with an implementation of the present disclosure. The process 300 indicated herein is described in detail with reference to the components of the system 100 of FIG. 1. As an initial matter, the BMC flash 140 can be updated with an authenticated and an uncorrupted BIOS image to be loaded into the BIOS Flash 130, at step 301. Alternatively, at step 302, a user can upload a new BIOS image to the BMC 150, and at step 303, the BMC 150 stores the new BIOS image to the BMC flash 140.

Once the desired BIOS image is stored in the BMC flash 140, the administrator can send the BMC 150 a command to update the BIOS image, at step 304. It should be understood that the command can be received from a user, an administrator, or as a result of an automatic process, from a remote update server. Alternatively, the command may be received at the BMC 150 from an interface. The interface can include a web-interface provided for an administrator, where the administrator is able to interact directly with the BMC 150. Thereafter, at step 305, the BMC 150 can read the BIOS image from the BMC flash 140. The BIOS image can then be written to the BIOS flash 130 at step 306. The process 300 concludes at step 306. In some alternative embodiments, the BMC 150 can backup the original BIOS image in the BIOS flash 130 to a storage device (e.g. BMC SDRAM). If the new written BIOS image is corrupted or otherwise does not work, the BMC 150 can restore this original BIOS image back to BIOS flash 130.

While particular embodiments of the present invention have been shown and described, it will be obvious to those skilled in the relevant arts that changes and modifications may be made without departing from the invention in its broader aspects. Therefore, the aim in the appended claims is to cover all such changes and modifications that fall within the true spirit and scope of the invention. The matter set forth in the foregoing description and accompanying drawings is offered by way of illustration only and not as a limitation. The actual scope of the invention is intended to be defined in the following claims when viewed in their proper perspective based on the prior art.

The terminology used herein is for the purpose of describing particular embodiments only and is not intended to limit the invention. As used herein, the singular forms "a," "an," and "the" are intended to include the plural forms as well, unless the context clearly indicates otherwise. Furthermore, to the extent that the terms "including," "includes," "having," "has," "with," or variants thereof are used in either the detailed description and/or the claims, such terms are intended to be inclusive in a manner similar to the term "comprising."

Unless otherwise defined, all terms (including technical and scientific terms) used herein have the same meaning as commonly understood by one of ordinary skill in the art to which this invention belongs. Furthermore, terms, such as those defined in commonly used dictionaries, should be interpreted as having a meaning that is consistent with their meaning in the context of the relevant art, and will not be interpreted in an idealized or overly formal sense unless expressly so defined herein.

## Claims

1. A method for writing a server BIOS image to a BIOS flash (130) by a BMC (150), the method comprising:
receiving a Golden BIOS image within a BMC flash (140) associated with the BMC (150);
determining that an active BIOS image within the BIOS flash (130) is at least one of a damaged BIOS image or a maliciously altered BIOS image; and
in response to determining that the active BIOS image is at least one of the damaged BIOS image or the maliciously altered BIOS image, overwriting the active BIOS image in the BIOS flash (130) with the Golden BIOS.

2. The method of claim 1, further comprising decompressing the Golden BIOS image within the BMC flash (140).

3. The method of claim 1 or 2, wherein determining that the active BIOS image is the damaged BIOS image, comprises determining that a hash or checksum value stored within the active BIOS image fails to match a calculated hash or checksum value.

4. The method of anyone of the claims 1 to 3, wherein determining that the active BIOS image is unauthenticated, comprises determining that the BMC (150) is unable to decrypt a BIOS hash or checksum value of the active BIOS image using a paired public key.

5. A non-transitory machine-readable medium having stored thereon instructions for performing a method comprising a machine executable code that when executed by at least one machine, causes the machine to:
receive a Golden BIOS image within a BMC flash (140) associated with a BMC (150);
determine that an active BIOS image within a BIOS flash (130) is at least one of a damaged BIOS image or a maliciously altered BIOS image; and
in response to determining that the active BIOS image is at least one of the damaged BIOS image or the maliciously altered BIOS image, overwrite the active BIOS image in the BIOS flash (130) with the Golden BIOS.

6. The non-transitory machine-readable medium of claim 5, further comprising the machine executable code that when executed by the at least one machine, causes the machine to decompress the Golden BIOS image within the BMC flash (140).

7. The non-transitory machine-readable medium of claim 5 or 6, wherein determining that the active BIOS image is the damaged BIOS image, comprises determining that a hash or checksum value stored within the active BIOS image fails to match a calculated hash or checksum value.

8. The non-transitory machine-readable medium of anyone of the claims 5 to 7, wherein determining that the active BIOS image is unauthenticated, comprises determining that the BMC (150) is unable to decrypt a BIOS hash or checksum value of the active BIOS image using a paired public key.

## Amended claims

### Amended claims in accordance with Rule 137(2) EPC.

1. A method for writing a server BIOS image to a BIOS flash (130) by a BMC (150), the method comprising:
receiving a Golden BIOS image within a BMC flash (140) associated with the BMC (150);
determining that an active BIOS image within the BIOS flash (130) is at least one of a damaged BIOS image or a maliciously altered BIOS image; and
in response to determining that the active BIOS image is at least one of the damaged BIOS image or the maliciously altered BIOS image, overwriting the active BIOS image in the BIOS flash (130) with the Golden BIOS image, **characterized in that**
the Golden BIOS image is a compressed file.

2. The method of claim 1, further comprising decompressing the Golden BIOS image within the BMC flash (140).

3. The method of claim 1 or 2, wherein determining that the active BIOS image is the damaged BIOS image, comprises determining that a hash or checksum value stored within the active BIOS image fails to match a calculated hash or checksum value.

4. The method of anyone of the claims 1 to 3, wherein determining that the active BIOS image is the damaged BIOS image, comprises determining that the BMC (150) is unable to decrypt a BIOS hash or checksum value of the active BIOS image using a paired public key.

5. A non-transitory machine-readable medium having stored thereon instructions for performing a method comprising a machine executable code that when executed by at least one machine, causes the machine to:
receive a Golden BIOS image within a BMC flash (140) associated with a BMC (150);
determine that an active BIOS image within a BIOS flash (130) is at least one of a damaged BIOS image or a maliciously altered BIOS image; and
in response to determining that the active BIOS image is at least one of the damaged BIOS image or the maliciously altered BIOS image, overwrite the active BIOS image in the BIOS flash (130) with the Golden BIOS image, **characterized in that**
the Golden BIOS image is a compressed file.

6. The non-transitory machine-readable medium of claim 5, further comprising the machine executable code that when executed by the at least one machine, causes the machine to decompress the Golden BIOS image within the BMC flash (140).

7. The non-transitory machine-readable medium of claim 5 or 6, wherein determining that the active BIOS image is the damaged BIOS image, comprises determining that a hash or checksum value stored within the active BIOS image fails to match a calculated hash or checksum value.

8. The non-transitory machine-readable medium of anyone of the claims 5 to 7, wherein determining that the active BIOS image is the damaged BIOS image, comprises determining that the BMC (150) is unable to decrypt a BIOS hash or checksum value of the active BIOS image using a paired public key.
